Europäisches Patentamt

European Patent Office

Office européen des brevets

(11) Publication number: **0 078 243**
**A2**

(12) # EUROPEAN PATENT APPLICATION

(21) Application number: **82830236.4**

(22) Date of filing: **17.09.82**

(51) Int. Cl.³: **B 01 D 33/10**
**B 01 D 33/38**

(30) Priority: **28.10.81 IT 4010781**

(43) Date of publication of application:
**04.05.83 Bulletin 83/18**

(84) Designated Contracting States:
**AT BE CH DE FR GB LI NL SE**

(71) Applicant: **Ferrari, Gaetano**
**Via passo Buole, 3**
**I-43100 Parma(IT)**

(71) Applicant: **Sani, Romano**
**Via Ippolito Nievo, 5**
**I-43100 Parma(IT)**

(72) Inventor: **Ferrari, Gaetano**
**Via passo Buole, 3**
**I-43100 Parma(IT)**

(72) Inventor: **Sani, Romano**
**Via Ippolito Nievo, 5**
**I-43100 Parma(IT)**

(74) Representative: **Bonfreschi, Mario**
**Bugnion S.p.A. Viale Trento Trieste, 25**
**I-41100 Modena(IT)**

(54) Improvements in rotary-drum filters.

(57) The invention relates to an improved filter of the type normally comprising a rotating drum (1) onto which fluid to be filtered is poured and to whose outer lateral surface those solid bodies requiring separation may cling; the filter further comprises a blade (2) placed in tangential contact with the lateral surface aforesaid of said drum and designed to remove solid bodies deposited thereon during the course of the drum's being caused to rotate; said filter being equipped with drive means serving to establish relative movement between blade and drum in a direction opposed to that set up between the same elements during normal operation of the filter.

Fig.1

## Improved rotary drum filter

The invention described herein is an improved filter of the rotating-drum type.

Rotary drum filters normally find their usefulness in the separation of solid bodies from liquid wherein they are held in suspension, the latter being caused to fall onto the drum proper in the filter assembly. The liquid passes through apertures located in the drum and is discharged from the bottom part of same, whilst solid bodies adhere to the drum outer surface whence they are removed by the scraping action of a blade positioned in direct contact with the lateral surface of said drum.

It may happen from time to time that one or more of such bodies held in suspension and requiring filtering become trapped between the drum and the blade, this causing blockage of further such bodies between drum and blade, and consequent separation of the blade from the drum surface. In this state, the blade is clearly no longer capable of carrying through a proper scraping action on those solid bodies clinging to the drum outer surface, and is therefore unable to remove said bodies, which in consequence arrive at the lower region of the drum and re-mingle with the liquid passing through —which in the event remains only part-filtered.

This drawback is one which recurs somewhat frequently, especially in tanneries. Liquids to be filtered following treatment of hides are in fact charged with thin flakes or slivers of leather which —being extremely viscid and therefore sticky— tend to lodge between the blade and filter-drum with marked regularity.

Rotary drum filters of the type presently in use are rendered incapable by the above defect of accomplishing a thorough filter in the case of water-waste given out by tanning processes, and thus are similarly unable such liquids as hold solid bodies in suspension having the same kind of consistency as the leather-flakes aforesaid.

As far as tanneries are concerned, the drawback thus outlined is sufficient reason in many instances for discouraging the use of rotary drum filters, and its occurence in other areas of application —albeit less frequent— necessitates the machine's being shut off for cleaning purposes, with greater or lesser regularity, as the case may be.

One advantage of the filter described herein is that of being able to avoid raising of the blade from the rotating drum upon intrusion of solid bodies between drum and blade.

A further advantage of the filter described herein is that the filter itself is kept perfectly clean and operational at all times without any need for its being shut down and cleaned at standstill.

Yet another advantage of the filter described herein lies in the fact that the filter proper is able to strain fluids of any kind, without giving rise to drawbacks of the type mentioned.

These and other advantages are provided by the filter to which the invention relates, being of the type comprising a rotating drum whereonto fluid for filtering is poured and to whose lateral outer surface solid bodies may cling, and a blade placed in tangential contact with the lateral surface of said drum and designed to remove said solid bodies therefrom in the course of the drum's rotating, characterised in that it comprises drive means serving to establish relative movement between blade and drum in a direction opposed to that set up between said blade and said drum during normal operation of the filter.

Additional features of the invention will emerge from the detailed description following, in which certain preferred embodiments are described with the aid of accompanying drawings, wherein:

fig 1 shows a schematic representation of the filter described herein, in perspective, with part of the filter-drum proper rendered transparent, and including a possible mode of embodying the drive means aforementioned;

fig 2 is a schematic section through the filter taken within a plane lying perpendicular to the filter axis, in which a further possible mode of embodying the drive means aforesaid is illustrated;

fig 3 is a schematic section through the filter taken likewise within a plane lying perpendicular to the filter axis, showing yet another possible mode of embodying the said drive means;

figs 4, 5 and 6 are large-scale illustrations of the contact-area between blade and drum, showing a succession of reciprocal positions assumed thereby brought about by said drive means.

The filter described herein is of the type comprising a rotating drum 1 caused to revolve about its own axis —by an electric motor for example, (not shown)— said drum being hollow inside and provided with small holes or slits located in its lateral surface.

Fluid requiring filtering action to separate solid bodies held in suspension is poured down from above, onto the drum 1, whereupon the liquid penetrates through its lateral surface to the inside, and passes out from the said drum's lower region. Solid bodies, on the other hand, are held on the drum's lateral outer surface.

Filter-apparatus of the kind generally comprises a blade 2 positioned in direct contact with the lateral drum-surface, which makes provision for removal of those solid bodies retained thus on the drum's outer lateral surface.

Actual removal of such bodies comes about by dint of the fact that, once the drum is caused to revolve, the solid bodies themselves are carried towards the blade and duly removed by the latter, the drum surface being thus subjected to an uninterrupted cleansing operation.

The filter to which the invention relates comprises drive means which serve to establish relative movement blade and drum in a direction opposed to that already set up between the same said blade and drum during normal working of the filter. This movement is designed to free any solid bodies which may become lodged between blade and drum and permit their subsequent removal from the drum.

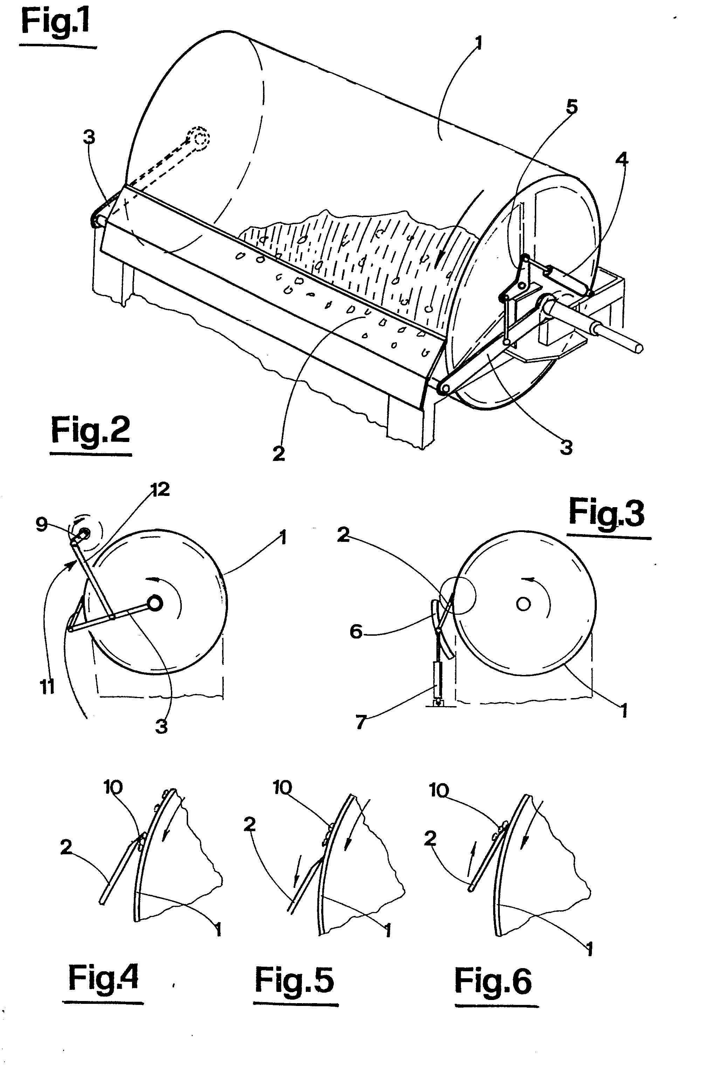

The drive means in question may be such as to impart rotary movement to the blade described about the drum axis, following the same rotational direction, travelling at greater angular speed than that of the drum, and with amplitude of such travel limited to a given circumferential arc. The blade itself 2 might for instance be connected to first extremities of a pair of rods 3 whose remaining extremities hinge about the drum axis-of-rotation in such a fashion as to restrict said blade to movements that follow the lateral drum surface profile, as in fig 1.

The rods 3 are caused to rotate, at will, by means of a jack 4 acting either directly on the rods or, alternatively, on an interconnecting lever 5, as in the drawing.

By contrast, the blade 2 may be actuated directly by a jack 7 and caused to remain in contact with the drum outer-surface in its movements by a pair of guides 6 having the shape of a circumferential arc and positioned concentrically with the drum, the blade's 2 own extremities being caused to slide by being detained in said guides 6.

By working jack 4 in fig 1, or jack 7 in fig 3, the blade 2 is caused to rotate for a short stretch at speed greater than that of the drum, thus freeing any solid bodies which might have become trapped between blade and drum. The blade is then returned to its former position and continues normal function.

In the embodiment illustrated schematically in fig 2, the blade —still obliged to follow the drum surface contour by rods 3— is kept in alternating motion (either continuous or short-periodic) by means of a linkage whose connecting-rod 12 joins with one of said rods 3, and whose crank 9 is caused to rotate by a motor not illustrated in the drawing.

Another possibility is that of applying vibratory motion to the blade —means of a conventional type operable likewise for brief periods. Whilst easy to carry into effect, the method is not illustrated in the drawings. Whether by alternating movement imparted to linkage 11 aforesaid, or by vibratory means, actuation of the blade obtains the single objective of freeing any solid bodies which may become lodged between blade and drum.

As an alternative to those methods aforesaid for producing relative movement between blade and drum, the possibility exists —instead of occasioning movement of the blade— of installing reversing gear of a convemtional type designed to work the drum-drive motor which, when operated, will cause the drum to revolve in the opposite direction to that followed in normal function, moving thus through a short circumferential arc. This method would prove equally as effective as the others mentioned in freeing solid bodies lodged fast between drum and blade.

Figures 4, 5 and 6 illustrate the succession of movements described by blade and drum utilising the means mentioned in the foregoing description. Solid particles of whatever substance 10 may be seen in fig 4 lodged between blade 2 and drum 1, the result being that the blade is lifted away from the drum surface. In fig 5, the blade has been removed from its usual position in order to free said particles 10. Fig 6 sees the blade returned to its former position in such a way as to remove the self-same particles 10 from the drum surface.

Depending upon the type of material being processed, hence on the likelihood of its becoming trapped between the filter-drum and blade, those movements described in the preceding paragraphs may be either continuous or of a marked frequency (causing the blade to vibrate, or investing it with alternating motion, for example); on the other hand, ·occasional movement such as that provided by the devices in figs 1 and 3 may be used, or reversing-gear fitted to the drum-motor. In any event, it will be clear that such drive means may be of any individual type whatsoever.

Claims

1) Improved rotary drum filter of the type comprising a rotating drum (1) whereonto fluid for filtering is poured and to whose lateral outer surface solid bodies requiring separation may cling, and a blade (2) placed in tangential contact with the lateral surface of said drum and designed to remove said solid bodies therefrom in the course of the drum's rotating, characterised in that it comprises drive means serving to establish relative movement between blade and drum in a direction opposed to that set up between said drum and said blade during normal operation of the filter.

2) Filter according to claim 1 characterised in that said drive means are designed to occasion rotational movement of said blade about the axis of said drum in like direction of rotation thereto, and at greater angular velocity, the amplitude of such movmement being limited to a circumferential arc; said drive means being further designed to return the blade to its former position having duly accomplished said rotational movement.

3) Filter according to claim 2 characterised in that it comprises at least one rod (3), one of whose extremities hinges with the axis of rotation of said drum and whose remaining extremity connects with said
blade; said drive means consisting of a linkage (11)
whose connecting-rod (12) joins with that rod hinged
hinged about the drum-axis of rotation aforesaid,
and whose crank (9) is caused to rotate by means of
a motor.

4) Filter according to claim 2 characterised in that
it comprises at least one rod (3), one of whose
extremities hinges with the axis of rotation of
said drum and whose remaining extremity connects
with said blade; said drive means consisting of a
jack (4) actuating said rod directly or by way of
an interconnecting lever (5).

5) Filter according to claim 2 characterised in that
it comprises a pair of guides (6) disposed concentrically to said drum and detaining respective extremities
of said blade which duly slide therein when the blade
is moved by said drive means.

6) Filter according to claim 1 characterised in that
said drive means comprise conventional reversing-
gear designed to work the motor imparting rotation
to said drum in such a way as to cause rotation
thereof in a direction opposed to that set up
during normal function, at will, and through a
short circumferential arc.

7) Filter according to claim 1 characterised in that
said drive means comprise conventional vibration- inducing means designed to invest said blade with vibratory motion through a circumferential arc following the lateral outer surface profile of said drum.

**Fig.1**

**Fig.2**

**Fig.3**

**Fig.4**   **Fig.5**   **Fig.6**